# EUROPÄISCHE PATENTSCHRIFT

(11) **EP 2 209 385 B1**
(45) Veröffentlichungstag und Bekanntmachung des Hinweises auf die Patenterteilung: **23.03.2016**
(21) Anmeldenummer: 08802733.9
(22) Anmeldetag: 01.10.2008
(51) Int. Cl.: A23G 1/20, A23G 3/02, A23G 3/20

(54) **EINLEGEVORRICHTUNG FÜR LOSE ARTIKEL, Z.B. MANDELKERNE, HASELNUSSKERNE ETC.**
INSERTION DEVICE FOR LOOSE ITEMS, FOR EXAMPLE ALMONDS, HAZELNUTS AND THE LIKE
DISPOSITIF D'INSERTION POUR DES ARTICLES EN VRAC, PAR EXEMPLE DES AMANDES OU DES NOISETTES DÉCORTIQUÉES, ETC.

(30) Priorität: 05.10.2007 AT 15792007
(43) Veröffentlichungstag der Anmeldung: 28.07.2010
(73) Patentinhaber: Haas Food Equipment GmbH, 1210 Wien (AT)
(72) Erfinder: HAAS, Johann, 3400 Klosterneuburg (AT); JIRASCHEK, Stefan, 2202 Königsbrunn (AT); HAAS, Josef, 1210 Wien (AT); HAAS, Johannes, 1040 Wien (AT); SCHELLER, Markus, 2004 Niederhollabrunn (AT)
(74) Vertreter: Patentanwälte Puchberger, Berger und Partner
(86) Internationale Anmeldenummer: PCT/EP2008/008316
(87) Internationale Veröffentlichungsnummer: WO 2009/046913

(56) Entgegenhaltungen:
- GB-A- 833 603
- US-A- 18 424
- US-A- 275 171
- US-A- 1 579 407

## Beschreibung

Die Erfindung bezieht sich auf eine Einlegevorrichtung zum Einbringen von losen Artikeln, wie z. B. Mandelkerne, Haselnusskerne etc., in die Vertiefungen von ebenen Platten, die mit in Längsreihen hintereinander angeordneten Vertiefungen versehen sind.

Die Einlegevorrichtung ist für den Einsatz in der Süßwarenindustrie vorgesehen. Sie wird dort bei der Herstellung von Süßwarenprodukten eingesetzt, bei denen verschiedene Artikel, wie z. B. Mandelkerne, Haselnusskerne etc., dem Herstellungsprozess als lose Artikel zugeführt werden und beim fertigen Süßwarenprodukt im Inneren des Produktes angeordnet sind und dort z. B. von Schokolade, einer Creme oder einer Füllmasse umhüllt sind. Diese Süßwarenprodukte können z. B. Konfektstücke, kleine formgebende Hohlwaffeln enthaltende Konfektstücke, Schokoladetafeln, Schokoladeriegeln etc. sein.
Die Einlegevorrichtung kann zum Beschicken von Gießformen eingesetzt werden, in denen Konfektstücke, Schokoladetafeln, Schokoladeriegel etc. entstehen. Die Einlegevorrichtung legt die losen Artikel in die leeren oder bereits teilweise gefüllten Vertiefungen dieser Gießformen ein.

Die Einlegevorrichtung kann bei der Herstellung von Konfektstücken eingesetzt werden, die kleine, formgebende Hohlwaffeln enthalten, die als Hohlkörperhälften ausgebildet sind. Die kleinen Hohlwaffeln werden als integrierte Teile von rechteckigen, gebackenen Waffeltafeln hergestellt, die beim Herstellen der Konfektstücke in die den kleinen Hohlwaffeln entsprechenden Teilstücke zerschnitten und aufgeteilt werden. Diese Waffeltafeln sind als ebene Platten ausgebildet, die an der Oberseite dem Hohlraum der Hohlkörperhälften entsprechende Vertiefungen und an der Unterseite den kleinen Hohlwaffeln entsprechende Ausbuchtungen besitzen. Diese Waffeltafeln sind ein knusprig-sprödes Backprodukt, das in einem Waffelbackofen aus flüssigem Waffelteig hergestellt wird. Diese Waffeltafeln werden in der Süßwarenindustrie - wegen der in sie integrieren, als Hohlkörperhälften ausgebildeten, kleinen Hohlwaffeln und zum Unterscheiden von den ebenen Waffelblättern - auch als flache Hohlwaffeln bezeichnet. Mit der Einlegevorrichtung können lose Artikel in die Vertiefungen dieser Waffeltafeln eingelegt werden.

Aus der US-PS 1,579,407 ist eine Einlegevorrichtung zum Beschicken von Schokoladetafelgießformen mit Mandeln bekannt. Die Einlegevorrichtung sieht einen über der Transportbahn der Gießformen angeordneten, nach oben offenen und zwei hintereinander angeordnete Behälterabteile aufweisenden Behälter vor. Die beiden Behälterabteile sind durch eine vertikale Trennwand getrennt. Das hintere Behälterabteil ist als Sammelkammer für die Mandeln ausgebildet und im vorderen Behälterabteil ist eine dem Behälterboden benachbarte Fördereinrichtung für die Mandeln angeordnet. Die im hinteren Behälterabteil angeordneten Mandeln gelangen über eine zwischen dem unteren Ende der vertikalen Trennwand und dem Behälterboden angeordnete Öffnung in das vordere Behälterabteil und zu der dort angeordneten Fördereinrichtung, von der die Mandeln zu der am unteren Ende der schrägen Vorderwand des Behälters angeordneten Auslassöffnung des Behälters befördert und aus dem Behälter ausgegeben werden.

Die Erfindung schlägt eine Einlegevorrichtung zum Einbringen von losen Artikeln, wie z. B. Mandelkerne, Haselnusskerne, gepuffte Getreidekörner etc., in die Vertiefungen von ebenen Platten vor, die mit in Längsreihen hintereinander angeordneten Vertiefungen versehen sind, wie z. B. gebackene Waffeltafeln, die mit einer, die Artikel in einer losen Anordnung enthaltenden, nach oben offenen Sammelkammer, mit einer von oben in die Sammelkammer hineinreichenden, nach oben über die Sammelkammer vorstehenden und die Artikel einzeln aus der Sammelkammer nach oben hinausbefördernden Entnahmevorrichtung, und mit einer die durch die Entnahmevorrichtung über den oberen Rand der Sammelkammer hinaus angehobenen Artikel zur Unterseite der Einlegevorrichtung hinunterführenden, zumindest eine außerhalb der Sammelkammer angeordnete, von der Sammelkammer zur Unterseite der Einlegevorrichtung hinunterführende Rutsche aufweisenden Abgabevorrichtung versehen ist.

Erfindungsgemäß ist die Entnahmevorrichtung mit einer, mit einer Unterdruckquelle verbundenen, drehbaren, hohlen Förderscheibe versehen, die in die Sammelkammer hinein reicht, dass die hohle Förderscheibe in einer Seitenwand eine seitliche Ansaugöffnung zum Erfassen der Artikel besitzt, und dass neben der mit der seitlichen Ansaugöffnung versehenen Seitenwand der hohlen Förderscheibe eine Rutsche der Abgabevorrichtung angeordnet ist.

In der erfindungsgemäßen Entnahmevorrichtung werden die in der Sammelkammer regellos angeordneten, losen Artikel von der Entnahmevorrichtung einzeln erfasst und in eine durch den Entnahmevorgang erzeugte Anordnung gebracht, in der sie an die Abgabevorrichtung übergeben werden. Die in der Sammelkammer regellos angeordneten, losen Artikel werden durch die Entnahmevorrichtung vereinzelt und von dieser einzeln der Abgabevorrichtung zugeführt.

Die Einlegevorrichtung besitzt eine Entnahmevorrichtung, die in die Sammelkammer hinein reicht, über die Sammelkammer nach oben vorsteht und die Abgabevorrichtung überragt, wobei die Entnahmevorrichtung die von ihr in der Sammelkammer erfassten Artikel aus der Sammelkammer heraushebt und die angehobenen Artikel an eine Rutsche der Abgabevorrichtung übergibt.

Die erfindungsgemäße Einlegevorrichtung ermöglicht eine schonende Handhabung von sehr unterschiedlich ausgebildeten, losen Artikeln. Die losen Artikel können ganze Nusskerne, wie z. B. Mandelkerne oder Haselnusskerne, oder auch Teile davon sein. Es können auch gepuffte Getreidekörner, wie z. B. gepuffte Reiskörner, gepuffte Maiskörner etc. sein. Die losen Artikel können auch Dragees sein, die regelmäßig oder annähernd regelmäßig geformt sind und z. B. eine kugelförmige, linsenförmige oder mandelförmige Gestalt besitzen. Die losen Artikel können auch längliche oder stiftförmige Gegenstände sein.

Gemäß einem weiteren Merkmal der Erfindung kann vorgesehen sein, dass die Entnahmevorrichtung mit einer, mit einer Unterdruckquelle verbundenen, drehbaren, hohlen Förderscheibe versehen ist, die in die Sammelkammer hinein reicht, dass die hohle Förderscheibe in einer Seitenwand eine seitliche Ansaugöffnung zum Erfassen der Artikel besitzt, und dass neben der mit der seitlichen Ansaugöffnung versehenen Seitenwand der hohlen Förderscheibe eine Rutsche der Abgabevorrichtung angeordnet ist.

Die sich drehende Förderscheibe bewegt ihre seitliche Ansaugöffnung entlang einer Kreisbahn durch die nach oben offene Sammelkammer. In der Sammelkammer erfasst die Förderscheibe mit ihrer seitlichen Ansaugöffnung einen der dort regellos angeordneten, losen Artikel. Dieser Artikel wird durch den auf die Ansaugöffnung einwirkenden Unterdruck an der Seitenwand der Förderscheibe festgehalten. Durch die Drehbewegung der Förderscheibe wird der Artikel aus der Sammelkammer herausgehoben und zur Abgabevorrichtung befördert. Wenn die den Artikel an der Seitenwand der Förderscheibe festhaltende Ansaugöffnung bei der Abgabevorrichtung angekommen ist, wird sie vom Unterdruck getrennt und der Artikel freigegeben. Der Artikel wird von einer Rutsche der Abgabevorrichtung aufgenommen. In der Rutsche wird der Artikel durch die Schwerkraft zur Unterseite der Einlegevorrichtung hinunter abgesenkt. Am unteren Ende der Rutsche wird der Artikel aus der Einlegevorrichtung ausgegeben und in die Vertiefung einer unterhalb der Einlegevorrichtung angeordneten, ebenen Platte eingelegt.
Diese Ausbildung sieht eine einreihige Variante der Einlegevorrichtung vor, mit der die in einer ebenen Platte in einer einzelnen Längsreihe hintereinander angeordneten Vertiefungen mit losen Artikeln beschickt werden. Die mit einer seitlichen Ansaugöffnung versehene Seitenwand der Förderscheibe und die zugehörige Rutsche der Abgabevorrichtung sind auf diese Längsreihe von Vertiefungen ausgerichtet. Die hohle Förderscheibe wird zum Erfassen eines losen Artikels mit der Unterdruckquelle verbunden und zum Loslassen des an der Seitenwand der Förderscheibe festgehaltenen Artikels von der Unterdruckquelle getrennt.

Gemäß einem weiteren Merkmal der Erfindung kann vorgesehen sein, dass die Entnahmevorrichtung mit zwei oder mehreren, mit Abstand nebeneinander angeordneten, mit einer gemeinsamen Unterdruckquelle verbundenen, drehbaren, hohlen Förderscheiben versehen ist, die in die Sammelkammer hinein reichen und in einer Seitenwand eine seitliche Ansaugöffnung zum Erfassen der Artikel besitzen, und dass neben jeder mit einer seitlichen Ansaugöffnung versehenen Seitenwand einer Förderscheibe eine Rutsche der Abgabevorrichtung angeordnet ist.

Diese Ausbildung sieht eine zwei- oder mehrreihige Variante der Einlegevorrichtung vor, die lose Artikel in die Vertiefungen von zwei oder mehreren, nebeneinander angeordneten Längsreihen einer ebenen Platte einbringt.

Gemäß einem weiteren Merkmal der Erfindung kann vorgesehen sein, dass die hohle Förderscheibe in beiden Seitenwänden eine seitliche Ansaugöffnung zum Erfassen der Artikel besitzt, und dass neben beiden, mit einer seitlichen Ansaugöffnung versehenen Seitenwänden der Förderscheiben jeweils eine Rutsche der Abgabevorrichtung angeordnet ist.

Bei dieser Ausbildung der Einlegevorrichtung werden die von einer Förderscheibe an ihren beiden Seitenwänden aus der Sammelkammer entnommenen, losen Artikel in die Vertiefungen zweier Längsreihen der ebenen Platte eingelegt. Bei ebenen Platten, bei denen die Längsreihen der Vertiefungen knapp nebeneinander angeordnet sind, bleibt zwischen den beiden Längsreihen, die von der Einlegevorrichtung mit losen Artikeln beschickt werden, eine Längsreihe von Vertiefungen frei. Wenn die Vertiefungen dieser Längsreihe ebenfalls mit losen Artikeln beschickt werden sollen, so geschieht dies mit Hilfe einer zweiten Einlegevorrichtung, bei der die Förderscheibe auf diese Längsreihe ausgerichtet ist.

Gemäß einem weiteren Merkmal der Erfindung kann vorgesehen sein, dass in der Seitenwand der hohlen Förderscheibe zwei oder mehrere, entlang einer Kreisbahn angeordnete, seitliche Ansaugöffnungen vorgesehen sind, und dass die neben der Seitenwand der Förderscheibe angeordnete Rutsche der Abgabevorrichtung auf die Kreisbahn der Ansaugöffnungen ausgerichtet ist.

Diese Ausbildung ermöglicht eine schonende Behandlung der in der Sammelkammer regellos angeordneten Artikel. Die sich drehende Förderscheibe entnimmt bei jeder Umdrehung zwei oder mehrere Artikel aus der Sammelkammer. Diese Artikel werden nacheinander aus der Sammelkammer entnommen und durch den Entnahmevorgang in eine Anordnung gebracht, die durch die Förderscheibe bzw. durch die Winkelabstände ihrer seitlichen Ansaugöffnungen vorgegeben ist. In dieser Anordnung werden die Artikel zur Abgabevorrichtung befördert und an diese übergeben. Bei einer Förderscheibe mit vielen entlang einer Kreisbahn angeordneten, seitlichen Ansaugöffnungen kann die den Ablauf des Entnahmevorganges bestimmende Drehzahl der Förderscheibe gegenüber einer nur eine seitliche Ansaugöffnung aufweisenden Förderscheibe deutlich herabgesetzt werden.

Gemäß einem weiteren Merkmal der Erfindung kann die Entnahmevorrichtung eine oberhalb der Sammelkammer angeordnete Justiereinheit für die von der Entnahmevorrichtung aus der Sammelkammer entnommenen Artikel besitzen.

Diese Ausbildung ist für das Einlegen von als längliche Gegenstände ausgebildeten Artikeln von Vorteil, weil bei diesen durch die Justiereinheit eine für alle Artikel gleichbleibende räumliche Ausrichtung erzielt werden kann.

Gemäß einem weiteren Merkmal der Erfindung kann vorgesehen sein, dass die Entnahmevorrichtung mit einer drehbaren, hohlen Förderscheibe versehen ist, die in die Sammelkammer hinein reicht und mit einer seitlichen Ansaugöffnung zum Erfassen der Artikel versehen ist, und dass die Entnahmevorrichtung eine der Förderscheibe zugeordnete Justiereinheit besitzt, die der Umlaufbahn der seitlichen Ansaugöffnung der Förderscheibe benachbart angeordnet ist.

Die Justiereinheit bildet ein der rotierenden Förderscheibe benachbartes, stationäres Hindernis, das neben der Umlaufbahn der seitlichen Ansaugöffnung der Förderscheibe angeordnet ist oder mehr oder weniger weit in diese Umlaufbahn hineinreicht.

Die Justiereinheit kann als Abstreifeinrichtung ausgebildet sein, die oberhalb der Abgabevorrichtung angeordnet ist und dort den an der seitlichen Ansaugöffnung der Förderscheibe durch Unterdruck festgehaltenen Artikel von der rotierenden Förderscheibe abstreift. Der abgestreifte Artikel fällt in die neben der Förderscheibe angeordnete Rutsche der Abgabevorrichtung. Während des Abstreifvorganges bleibt die Verbindung der seitlichen Ansaugöffnung mit dem im Inneren der hohlen Förderscheibe herrschenden Unterdruck erhalten.

Die Justiereinheit kann als Ausrichteinrichtung für die Artikel ausgebildet sein, welche den Artikel, der an der seitlichen Ansaugöffnung der Förderscheibe durch Unterdruck festgehalten wird, gegenüber der Förderscheibe ausrichtet bzw. einen zweiten an der Ansaugöffnung festgehaltenen Artikel von der Ansaugöffnung abstreift. Die Position der Justiereinheit kann so gewählt sein, dass z. B. ein länglicher Artikel; der an der seitlichen Ansaugöffnung der Förderscheibe in radialer Ausrichtung festgehalten wird, beim Passieren der Justiereinheit mit dieser in Kontakt kommt und von dieser tangential ausgerichtet wird. Die Position der Justiereinheit kann auch so gewählt sein, dass z. B. von zwei mit ihren spitzen Enden in der seitlichen Ansaugöffnung der Förderscheibe festgehaltenen, mandelförmigen Artikeln beim Passieren der Justiereinheit ein Artikel abstreift wird und der andere Artikel an der Ansaugöffnung verbleibt. Die Justiereinheit kann oberhalb der nach oben offenen Sammelkammer angeordnet sein, sodass ein durch die Justiereinheit von der rotierenden Förderscheibe abgestreifter Artikel in die Sammelkammer fällt.

Gemäß einem weiteren Merkmal der Erfindung kann die Justiereinheit ein bogenförmiges Justierelement besitzen, das sich entlang der Umlaufbahn der seitlichen Ansaugöffnung der Förderscheibe erstreckt.

Gemäß einem weiteren Merkmal der Erfindung kann das bogenförmige Justierelement an seinem der Umlaufbahn der seitlichen Ansaugöffnung der Förderscheibe benachbarten, unteren Rand mehrere, nach unten vorstehende Zacken besitzen.

Diese Ausbildung erlaubt es, z. B. einen an der Seitenwand der Förderscheibe festgehaltenen, mandelförmigen Artikel während der Drehung der Förderscheibe in mehreren, durch die Zacken des Justierelementes definierten Schritten in die durch die Justiereinheit vorgegebene, räumliche Ausrichtung zu überführen. Darüber hinaus kann das Justierelement auch so angeordnet sein, dass von zwei mit ihren spitzen Enden in einer Ansaugöffnung festgehaltenen, mandelförmigen Artikeln in einem ersten Schritt ein mandelförmiger Artikel von der seitlichen Ansaugöffnung abstreift wird und der andere mandelförmiger Artikel in mehreren, durch die Zacken des Justierelementes definierten Schritten tangential zur Kreisbahn der seitlichen Ansaugöffnung ausgerichtet wird.

Gemäß einem weiteren Merkmal der Erfindung kann vorgesehen sein, dass die Entnahmevorrichtung mit zwei oder mehreren, nebeneinander angeordneten, drehbaren, hohlen Förderscheiben versehen ist, die in die Sammelkammer hinein reichen und an zumindest einer Seitenwand eine seitliche Ansaugöffnung zum Erfassen der Artikel aufweisen, dass die Entnahmevorrichtung eine den Förderscheiben zugeordnete, breite Justiereinheit besitzt, die sich quer über alle Förderscheiben erstreckt, und dass die breite Justiereinheit für jede mit einer seitlichen Ansaugöffnung versehene Seitenwand (33) (36) der Förderscheiben ein eigenes Justierelement vorsieht.

Auch bei dieser Ausbildung der Einlegevorrichtung kann die breite Justiereinheit der Entnahmevorrichtung oberhalb der Abgabevorrichtung angeordnet und als Abstreifeinrichtung ausgebildet sein. In diesem Fall werden die an den Seitenwänden der Förderscheiben festgehaltenen Artikel bei allen Förderscheiben gleichzeitig durch die breite Justiereinheit von den Förderscheiben abgestreift. Die abgestreiften Artikel fallen dann in die neben den Seitenwänden der Förderscheiben angeordneten Rutschen der Abgabevorrichtung und werden in diesen Rutschen zur Unterseite der Einlegevorrichtung hinunter befördert und an den unteren Enden der Rutschen aus der Einlegevorrichtung ausgegeben.

Alternativ dazu kann die breite Justiereinheit entlang den oberen Hälften der Förderscheiben angeordnet und der Abgabevorrichtung vorgelagert sein. In diesem Fall werden die an den Seitenwänden der Förderscheiben festgehaltenen Artikel bei allen Förderscheiben durch den Kontakt mit der breiten Justiereinheit in die durch die Justiereinheit vorgegebene räumliche Ausrichtung gebracht. Gegebenenfalls werden auch von den seitlichen Ansaugöffnungen der Förderscheiben festgehaltene, überzählige Artikel von der jeweiligen Förderscheibe abstreift, sodass nur ein Artikel pro Ansaugöffnung von den Förderscheiben zur Abgabevorrichtung transportiert wird.

Gemäß einem weiteren Merkmal der Erfindung kann vorgesehen sein, dass bei der Entnahmevorrichtung eine drehbare, hohle Förderscheibe vorgesehen ist, in deren Innenraum ein Abdeckbauteil stationär angeordnet ist, der in dem der Abgabevorrichtung benachbarten Sektor der Förderscheibe angeordnet ist und dort die Umlaufbahn der in einer Seitenwand der Förderscheibe angeordneten, seitlichen Ansaugöffnung abdeckt.

Bei dieser Ausbildung der Entnahmevorrichtung bewegt die in ihrem Innenraum mit der Unterdruckquelle verbundene, rotierende, hohle Förderscheibe die in ihrer Seitenwand angeordnete, seitliche Ansaugöffnung durch die Sammelkammer und saugt dort einen der dort regellos angeordneten Artikel an ihrer Ansaugöffnung bzw. an ihrer Seitenwand fest. Die Förderscheibe bewegt dann den an ihrer Seitenwand festgehaltenen Artikel entlang einer Kreisbahn aus der Sammelkammer nach oben heraus und bis zu einer oberhalb der Abgabevorrichtung angeordneten, oberen Position. Dort lässt sie den Artikel los, weil ihre seitliche Ansaugöffnung das obere Ende des im Innenraum der Förderscheibe angeordneten, stationären Abdeckbauteils passiert und durch diesen von dem im Innenraum der Förderscheibe herrschenden Unterdruck getrennt wird. Die Förderscheibe bewegt ihre seitliche Ansaugöffnung entlang dem Abdeckbauteil nach unten bis in eine in der Sammelkammer angeordnete, untere Position, die durch das untere Ende des Abdeckbauteils bestimmt wird. Beim Verlassen des Abdeckbauteils wird die seitliche Ansaugöffnung der Förderscheibe wieder mit dem im Innenraum der Förderscheibe herrschenden Unterdruck verbunden. Der in der oberen Position der seitlichen Ansaugöffnung von der rotierenden Förderscheibe losgelassene Artikel wird von der Abgabevorrichtung aufgenommen und in der Rutsche der Abgabevorrichtung von der Oberseite der Abgabevorrichtung zur Unterseite der Einlegevorrichtung hinunter befördert.

Bei dieser Ausbildung der Entnahmevorrichtung kann die rotierende Förderscheibe mit ihrer seitlichen Ansaugöffnung fortlaufend einen losen Artikel nach dem anderen aus der Sammelkammer entnehmen, ohne dass die Förderscheibe am Ende jedes Entnahmevorganges zum Loslassen des entnommenen Artikels von der Unterdruckquelle getrennt werden muss. Die rotierende, hohle Förderscheibe bleibt ständig mit der Unterdruckquelle verbunden, während bei ihrer seitlichen Ansaugöffnung der Unterdruck durch den stationären Abdeckbauteil fortlaufend abgeschaltet und zugeschaltet wird.

Diese Ausbildung sieht eine Einlegevorrichtung vor, mit der die in einer ebenen Platte in einer einzelnen Längsreihe hintereinander angeordneten Vertiefungen mit losen Artikeln beschickt werden. Die Seitenwand der Förderscheibe und die zugehörige Rutsche der Abgabevorrichtung sind auf diese Längsreihe von Vertiefungen ausgerichtet. Die Seitenwand der hohlen Förderscheibe kann erfindungsgemäß mit zwei oder mehreren, seitlichen Ansaugöffnungen versehen sein. Die rotierende, hohle Förderscheibe bleibt ständig mit der Unterdruckquelle verbunden, während bei ihren seitlichen Ansaugöffnungen der Unterdruck durch den stationären Abdeckbauteil fortlaufend abgeschaltet und zugeschaltet wird.

Gemäß einem weiteren Merkmal der Erfindung kann vorgesehen sein, dass der im Innenraum der hohlen Förderscheibe angeordnete Abdeckbauteil in dem der Abgabevorrichtung benachbarten Sektor der Förderscheibe die Umlaufbahnen der in beiden Seitenwänden der Förderscheibe angeordneten, seitlichen Ansaugöffnungen abdeckt.

Diese Ausbildung sieht eine Einlegevornchtung vor, bei der die von einer Förderscheibe an ihren beiden Seitenwänden aus der Sammelkammer entnommenen, losen Artikel in die Vertiefungen zweier Längsreihen einer ebenen Platte eingelegt werden. Bei der Förderscheibe ist der seitliche Abstand der beiden Seitenwände und bei der Abgabevorrichtung ist der seitliche Abstand der beiden Rutschen auf den seitlichen Abstand von zwei, in der ebenen Platte angeordneten Längsreihen von Vertiefungen ausgerichtet. Diese beiden Längsreihen können unmittelbar nebeneinander angeordnet oder durch eine Längsreihen von Vertiefungen von einander getrennt sein. Die an beiden Seitenwänden mit einer oder mehreren seitlichen Ansaugöffnungen versehene, rotierende, hohle Förderscheibe bleibt ständig mit der Unterdruckquelle verbunden, während bei ihren seitlichen Ansaugöffnungen der Unterdruck durch den stationären Abdeckbauteil fortlaufend abgeschaltet und zugeschaltet wird.

Der für den Innenraum der hohlen Förderscheibe vorgesehene, stationären Abdeckbauteil kann als ein massiver Formkörper ausgebildet sein, der sich in dem der Abgabevorrichtung benachbarten Sektor der Förderscheibe entlang der Umlaufbahn der, seitlichen Ansaugöffnung erstreckt. Der stationäre Abdeckbauteil kann als eine kreissektorförmige Platte ausgebildet sein, die im Innenraum der Förderscheibe in dem der Abgabevorrichtung benachbarten Sektor angeordnet ist und sich dort entlang der Umlaufbahn der seitlichen Ansaugöffnung erstreckt.

Gemäß einem weiteren Merkmal der Erfindung kann der im Innenraum der hohlen Förderscheibe angeordnete Abdeckbauteil als ein bogenförmiger Schieber ausgebildet sein, der im Innenraum der Förderscheibe verstellbar angeordnet ist.

Gemäß einem weiteren Merkmal der Erfindung kann jede Rutsche der Abgabevorrichtung mit einem sich nach unten verjüngenden Querschnitt versehen sein.

Diese Ausbildung ist für das Einlegen von länglichen Artikeln in mit länglichen Vertiefungen versehene Platten von Vorteil, weil sich die länglichen Artikel beim Passieren dieser Rutsche von selbst in Längsrichtung der Rutsche ausrichten, bevor sie am unteren Ende der Rutsche in Längsrichtung der Rutsche ausgerichtet ausgegeben werden.

Erfindungsgemäß kann jede Rutsche der Abgabevorrichtung einen V-förmigen Querschnitt aufweisen.

Gemäß einem weiteren Merkmal der Erfindung kann bei der Abgabevorrichtung am unteren Ende jeder Rutsche eine die Rutsche blockierende Klappe vorgesehen sein, die zwischen einer Sperrstellung und einer Freigabestellung verschwenkbar ist.

Diese Ausbildung erleichtert die Synchronisation des Einlegevorganges mit der Vorschubbewegung der unterhalb der Einlegevorrichtung angeordneten, ebenen Platte, in deren Vertiefungen die losen Artikel eingelegt werden.

Gemäß einem weiteren Merkmal der Erfindung kann vorgesehen sein, dass oberhalb der Sammelkammer eine die losen Artikel enthaltende Vorratskammer angeordnet ist, die nach unten in die Sammelkammer mündet, und dass die mit einer drehbaren, hohlen Förderscheibe versehene Entnahmevorrichtung unterhalb der Vorderseite der Vorratskammer angeordnet ist

Gemäß einem weiteren Merkmal der Erfindung kann die drehbare, hohle Förderscheibe der Entnahmevorrichtung einen unrunden Außenumfang besitzen.

Diese Ausbildung erlaubt es, die für das Entnehmen der losen Artikel aus der Sammelkammer erforderliche Drehbewegung der Förderscheibe zur mechanischen Auflockerung der in der Sammelkammer regellos angeordneten Artikel zu nutzen.

Um eine mechanische Auflockerung der losen Artikel in der Sammelkammer zu erzielen, kann die drehbare, hohle Förderscheibe der Entnahmevorrichtung einen eckigen Außenumfang besitzen.

Gemäß einem weiteren Merkmal der Erfindung kann die drehbare, hohle Förderscheibe der Entnahmevorrichtung mit an ihrem äußeren Umfang in Umfangsrichtung aufeinanderfolgenden Abflachungen versehen sein.

Bei dieser Ausbildung weist die sich drehende Förderscheibe einen einem Vieleck ähnlichen Außenumfang auf, wobei benachbarte Ablachungen durch eine scharfe oder abgerundete Ecke bzw. Kante miteinander verbunden sind.

Gemäß einem weiteren Merkmal der Erfindung kann die drehbare, hohle Förderscheibe mit abstehenden, durch die Sammelkammer bewegbaren Vorsprüngen versehen sein.

Diese Ausbildung ist für eine mechanische Auflockerung der in der Sammelkammer regellos angeordneten, losen Artikel von Vorteil.

Nachstehend wird die Erfindung an einigen Ausführungsbeispielen anhand der Zeichnungen näher erläutert. In den Zeichnungen zeigen:
Fig. 1 eine schmale Einlegevorrichtung von der Seite,
Fig. 2 die Einlegevorrichtung von Fig. 1 im Querschnitt,
Fig. 3 eine breite Einlegevorrichtung mit mehreren nebeneinander angeordneten, hohlen Förderscheiben von der Seite,
Fig. 4 die breite Einlegevorrichtung von Fig. 3 in einem zur Querachse senkrechten und zu einer Förderscheibe parallel verlaufenden Schnitt,
Fig. 5 die breite Einlegevorrichtung von Fig. 3 in einem zur Querachse senkrechten und durch eine Förderscheibe verlaufenden Schnitt, und
Fig. 6 die breite Einlegevorrichtung von Fig. 3 in einem zur Querachse parallelen, vertikalen Schnitt entlang der Linie VI - VI in Fig. 4.

Die Zeichnungen zeigen Einlegevorrichtungen, die als flache Hohlwaffeln ausgebildete, gebackene Waffeltafeln mit losen Artikeln beschicken und diese in die teilweise mit einer Creme oder einer anderen Füllmasse gefüllten Vertiefungen der Waffeltafeln einbringen. Die Waffeltafeln sind als rechteckige, langgestreckte, ebene Platten ausgebildet, in denen in Längsrichtung ausgerichtete, längliche Vertiefungen in mehreren, nebeneinander angeordneten Längsreihen in Längsrichtung der Waffeltafeln hintereinander angeordnet sind. In diese Vertiefungen werden von den Einlegevorrichtungen längliche, ovale oder mandelförmige Artikel eingebracht, die in Längsrichtung ausgerichtet in der jeweiligen Vertiefung liegen. Der besseren Übersichtlichkeit halber, sind in den Zeichnungen die Waffeltafeln nur schematisch - d. h. ohne Wandstärke und ohne Creme bzw. Füllmasse - und die Einlegevorrichtungen ohne die losen Artikel dargestellt. Die Waffeltafeln werden nachstehend als mit Vertiefungen versehene, ebene Platten bezeichnet.

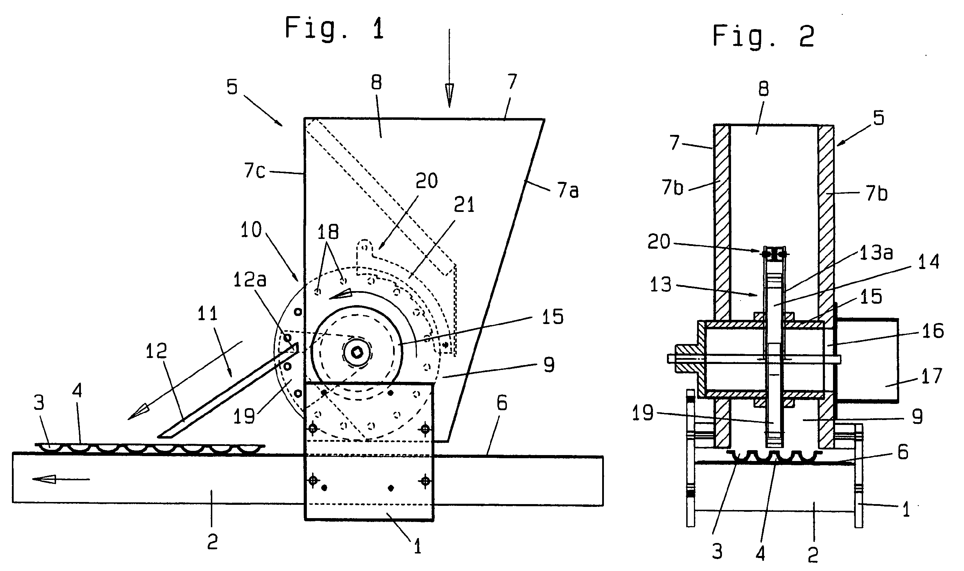

Die Fig. 1 und 2 zeigen ein Maschinengestell 1 mit einer horizontalen Fördereinrichtung 2 für die mit Vertiefungen 3 versehenen, länglichen, ebenen Platten 4. Die Platten 4 liegen in Längsrichtung ausgerichtet auf der Fördereinrichtung 2. Jede Platte 4 weist vier nebeneinander angeordnete Längsreihen mit jeweils acht hintereinander angeordneten, länglichen Vertiefungen 3 auf. Das Maschinengestell 1 trägt eine oberhalb der Fördereinrichtung 2 angeordnete Einlegevorrichtung 5, die in Längsrichtung ausgerichtete, längliche Artikel in die Vertiefungen der auf dem Förderband 6 der Fördereinrichtung 2 liegenden Platte 4 einbringt.

Die Einlegevorrichtung 5 besitzt ein am Maschinengestell 1 befestigtes Gehäuse 7. Dieses enthält in seiner oberen Hälfte eine trichterförmige Vorratskammer 8 für die losen Artikel. Am unteren Ende des Gehäuses 7 ist eine nach oben offene Sammelkammer 9 für die losen Artikel angeordnet. Die beiden Kammern sind an der Rückseite des Gehäuses 7 durch eine schrägstehende Rückwand 7a des Gehäuses 7 begrenzt.

Beim Befüllen der Einlegevorrichtung 5 werden die losen Artikel von oben in das Gehäuse 7 eingefüllt. Im Gehäuse 7 bilden die Artikel einen losen Haufen, der die Vorratskammer 8 weitgehend ausfüllt und sich entlang der schrägstehenden Gehäuserückwand 7a nach unten bis in die Sammelkammer 9 erstreckt. Die Artikel sind in dem losen Haufen regellos übereinander bzw. nebeneinander angeordnet. In der Sammelkammer 9 bilden die Artikel ein lockeres Schüttbett, in dem sie ebenfalls regellos übereinander bzw. nebeneinander angeordnet sind.

Unterhalb der Vorratskammer 8 ist eine von oben in die Sammelkammer 9 hineinreichende Entnahmevorrichtung 10 angeordnet, die über die Sammelkammer 9 nach oben vorsteht. Die Entnahmevorrichtung 10 erfasst mit ihrem in die Sammelkammer 9 hineinreichenden Teil zumindest einen der dort angeordneten, losen Artikel. Die Entnahmevorrichtung 10 befördert diesen Artikel aus der Sammelkammer 9 nach oben heraus und übergibt ihn an eine im Anschluss an die Sammelkammer 9 angeordnete Abgabevorrichtung 11. Die Abgabevorrichtung 11 senkt den von ihr übernommen Artikel bis zur Unterseite der Einlegevorrichtung 5 ab und gibt ihn dort an eine Vertiefung 3 der ebenen Platte 4 ab.

Die Abgabevorrichtung 11 sieht eine von ihrer Oberseite bis zur Unterseite der Einlegevorrichtung 5 reichende, nach vorne schräg abfallende Rutsche 12 vor, die einer Längsreihe von Vertiefungen 3 der auf dem Förderband 6 liegenden Platte 4 zugeordnet ist. Der an die Abgabevorrichtung 11 übergebene Artikel wird in dieser Rutsche 12 durch die Schwerkraft abgesenkt. Die Rutsche 12 besitzt einen V-förmigen Querschnitt. Ein sich in der Rutsche 12 zur Unterseite der Einlegevorrichtung 5 bewegender, länglicher Artikel richtet sich selbsttätig in Längsrichtung der Rutsche 12 aus, bevor er am unteren Ende der Rutsche 12 die Einlegevorrichtung 5 verlässt.

Die Entnahmevorrichtung 10 sieht eine um eine horizontale Achse drehbare, hohle Förderscheibe 13 vor. Die Förderscheibe ist oberhalb der Sammelkammer 9 im Gehäuse 7 drehbar gelagert. Sie besitzt einen nach unten bis in die Sammelkammer 9 hineinreichenden Scheibenkörper, der einen nach innen zur Drehachse der Förderscheibe 13 hin offenen, hohlen Innenraum 14 enthält. Dieser Innenraum 14 wird von den beiden Seitenwänden 13a, 13b der Förderscheibe 13 seitlich begrenzt und ist entlang dem äußeren Umfang der Förderscheibe 13 geschlossen..

Die Förderscheibe 13 sitzt auf eine Hohlwelle 15, die oberhalb der Sammelkammer 9 angeordnet ist und in den beiden seitlichen Gehäusewänden 7b drehbar gelagert ist. Der Innenraum 14 der Förderscheibe 13 ist mit dem Innenraum der Hohlwelle 15 verbunden und dieser ist über eine Öffnung 16 in der seitlichen Gehäusewand 7b mit einem an die Gehäusewand 7b anschließenden Rohrstutzen 17 verbunden, der seinerseits mit einer Unterdruckquelle (nicht dargestellt) verbunden ist. Die Hohlwelle 15 wird durch einen nicht dargestellten Drehantrieb angetrieben.

Die Seitenwände 13a, 13b der Förderscheibe 13 enthalten jeweils mehrere, seitliche Ansaugöffnungen 18 zum Erfassen der losen Artikel. Die Ansaugöffnungen 18 werden durch die Drehbewegung der Förderscheibe durch die Sammelkammer 9 befördert. Die Ansaugöffnungen 18 sind jeweils entlang einer zur Drehachse der Förderscheibe 13 konzentrischen Kreisbahn nahe dem äußeren Umfang der Förderscheibe 13 angeordnet. Die Ansaugöffnungen 18 durchsetzen jeweils die Seitenwand 13a, 13b der Förderscheibe 13 und stehen über den Innenraum 14 der Förderscheibe 13 mit der Unterdruckquelle in Verbindung.

Im Innenraum 14 der Förderscheibe 13 ist ein stationärer Abdeckbauteil 19 angeordnet, der sich in dem der Abgabevorrichtung 11 benachbarten Sektor der Förderscheibe 13 vom vorderen Scheitel der Förderscheibe 13 nach unten bis in die Sammelkammer 9 erstreckt und in diesem Scheibensektor die Umlaufbahnen der seitlichen Ansaugöffnungen 18 von dem im Innenraum 14 der Förderscheibe 13 herrschenden Unterdruck trennt. Der Abdeckbauteil 19 sitzt auf einer in der Hohlwelle 15 angeordneten und zu dieser koaxialen, stationären Achse 15a. Die Achse 15a steht während der Drehbewegungen der Förderscheibe 13 still. Sie ragt aus dem Gehäuse 7 der Einlegevorrichtung 5 seitlich hervor und kann an ihrem aus dem Gehäuse 7 seitlich vorstehenden Endabschnitt verdreht werden, um die Winkelposition des Abdeckbauteils 19 innerhalb der Förderscheibe 13 zu verstellen.

Die rotierende Förderscheibe 13 bewegt ihre seitlichen Ansaugöffnungen 18 durch die Sammelkammer 9. In der Sammelkammer 9 saugt sie einige der dort regellos angeordneten Artikel an und hält diese an einer ihrer Seitenwände 13a, 13b fest. Die von ihr festgehaltenen Artikel befördert die rotierende Förderscheibe 13 entlang einer Kreisbahn aus der Sammelkammer 9 heraus und bis zum vorderen Scheitel der Förderscheibe 13. Dort passieren die Ansaugöffnungen 18 nacheinander den Beginn des Abdeckbauteils 19, der sie von dem im Innenraum 14 der Förderscheibe 13 herrschenden Unterdruck trennt. Dadurch werden die Ansaugöffnungen 18 unwirksam und die Artikel lösen sich von der Förderscheibe 13 und werden dann von den zu beiden Seiten der Förderscheibe 13 angeordneten, nach vorne schräg abfallenden Rutschen 12 der Abgabevorrichtung 11 aufgenommen und in diesen zur Unterseite der Einlegevorrichtung 5 hinunter befördert. Die beiden Rutschen 12 sind auf die Vertiefungen 3 der beiden mittleren Längsreihen der auf dem Förderband 6 liegenden Platte 4 ausgerichtet. Jede Rutsche 12 besitzt einen, dem vorderen Scheitel der Förderscheibe 13 zugeordneten, oberen Anfangsabschnitt 12a. Die rotierende Förderscheibe 13 bewegt ihre seitlichen Ansaugöffnungen 18 entlang dem Abdeckbauteil 19 nach unten und über das untere Ende des Abdeckbauteils 19 hinaus in die Sammelkammer 9. Dort sind seitlichen Ansaugöffnungen 18 der Förderscheibe 13 wieder mit dem in ihrem Innenraum 14 herrschenden Unterdruck verbunden.

Der rotierenden Förderscheibe 13 ist eine Justiereinheit 20 für die an ihren seitlichen Ansaugöffnungen 18 festgehaltenen, länglichen Artikel zugeordnet. Die Justiereinheit 20 ist im Bereich der oberen Hälfte der Förderscheibe 13 angeordnet und im Gehäuse 7 der Einlegevorrichtung 5 verankert. Die Justiereinheit 20 besitzt zwei bogenförmige Justierelemente 21, die an beiden Seiten der Förderscheibe 13 jeweils entlang der Umlaufbahn der seitlichen Ansaugöffnungen 18 angeordnet sind. Die beiden Justierelemente 21 sind an einer oberhalb der Förderscheibe 13 angeordneten Achse 20a befestigt. Durch Verdrehen dieser Achse 20a kann die Position der Justierelemente 21 gegenüber der jeweiligen Umlaufbahn der Ansaugöffnungen 18 verstellt werden. Die Justierelemente 21 sind an ihrem der Umlaufbahn der Ansaugöffnungen 18 zugewandten, unteren Rand mit nach unten vorstehenden Zacken 21 a versehen. Die Justiereinheit 20 und ihre Justierelemente 21 stellen ein der rotierenden Förderscheibe 13 benachbartes, stationäres Hindernis dar. Durch die Drehbewegung der Förderscheibe 13 kommen die an den seitlichen Ansaugöffnungen 18 festgehaltenen Artikel mit den Justierelementen 21 in Kontakt. Bei zwei an einer Ansaugöffnung 18 mit ihren spitzen Enden festgehaltenen, mandelförmigen Artikeln wird einer von der Ansaugöffnung 18 verdrängt bzw. abgestreift.

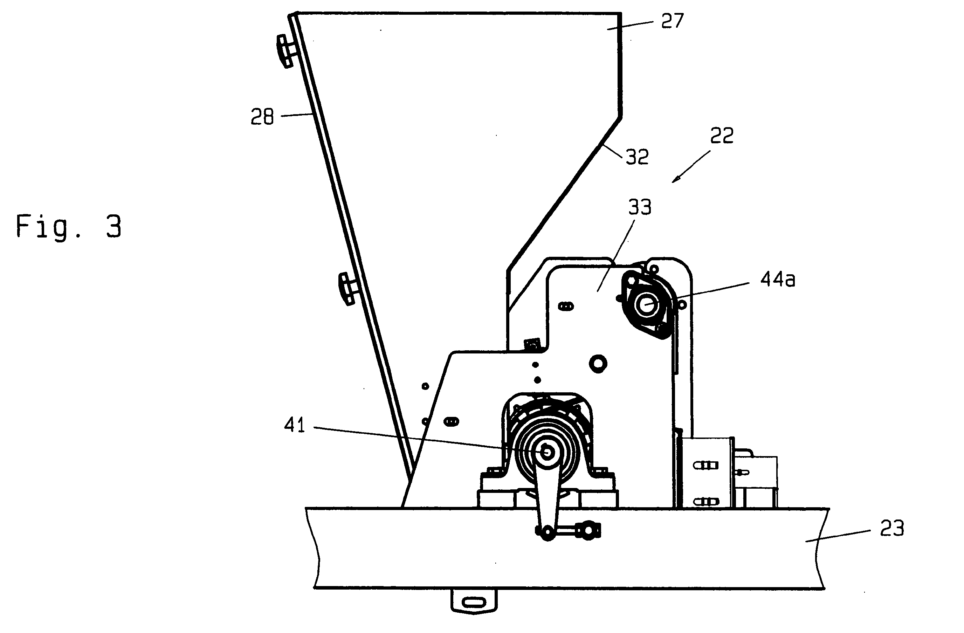

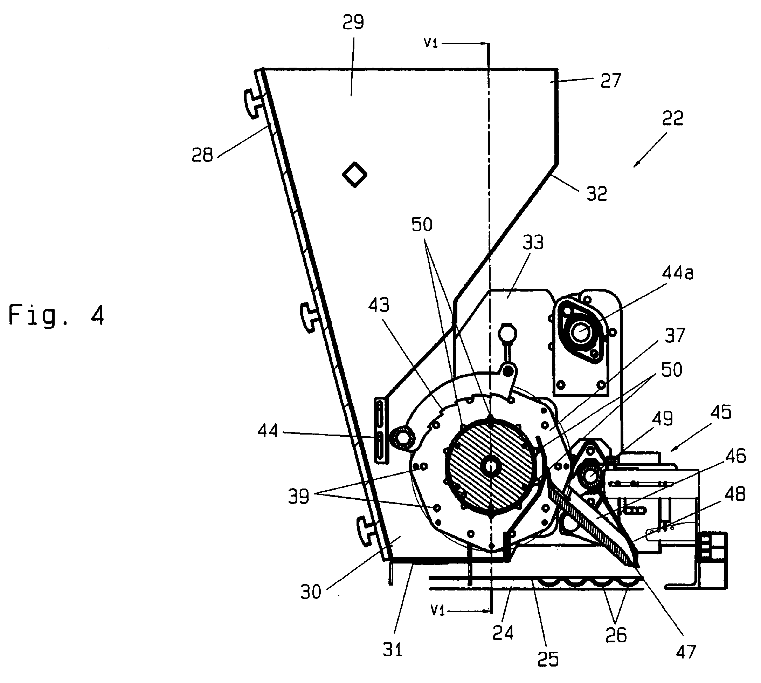

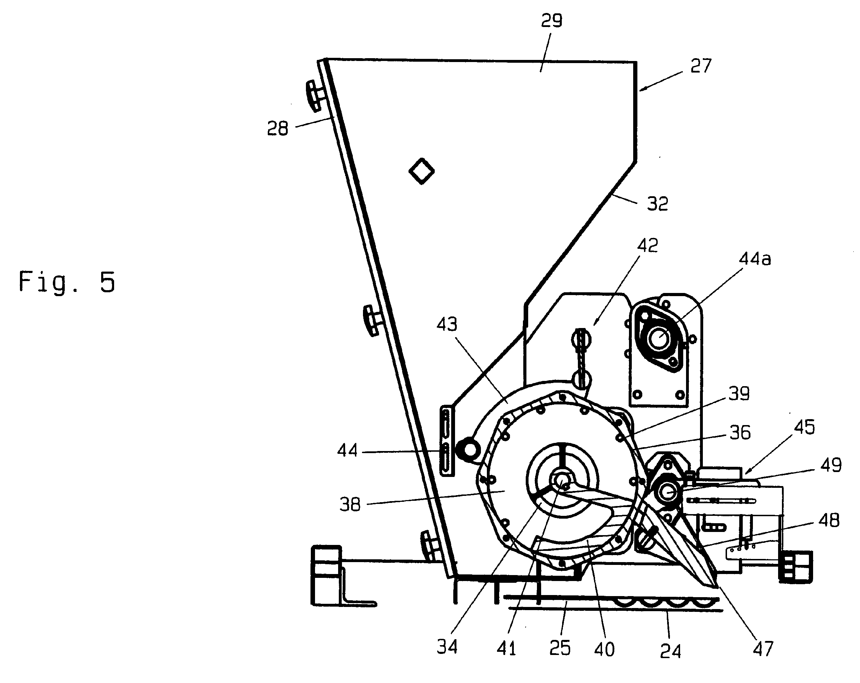

Die Fig. 3-6 zeigen eine weitere Ausführungsform einer Einlegevorrichtung, mit der lose Artikel in die in mehreren nebeneinanderliegenden Längsreihen angeordneten Vertiefungen von großformatigen, gebackenen Waffeltafeln eingebracht werden. Die Waffeltafeln werden nachstehend als mit Vertiefungen versehene, ebene Platten bezeichnet.

Die Einlegevorrichtung 22 ist mit ihrem Gestell 23 an der Oberseite einer horizontalen Transportvorrichtung angeordnet, die ein horizontal verlaufendes Förderband 24 besitzt, auf dem die als ebene Platten 25 bezeichneten Waffeltafeln in Längsrichtung durch die Transportvorrichtung befördert werden. Die Einlegevorrichtung 22 erstreckt sich in Querrichtung über die gesamte Breite dieser Transportvorrichtung und besitzt zwei seitliche Längsträger 23, die zu beiden Seiten des Förderbandes 24 dieser Transportvorrichtung angeordnet und auf den Rahmen dieser Transportvorrichtung aufgesetzt sind. Von dieser Transportvorrichtung ist in den Zeichnungen nur das entlang der Unterseite der Einlegevorrichtung 22 verlaufende Förderband 24 dargestellt. Auf diesem Förderband 24 werden die ebenen Platten 25 unterhalb der Einlegevorrichtung 22 hindurch befördert, während die Einlegevorrichtung 22 lose Artikel in die Vertiefungen 26 der ebenen Platten 25 einbringt. Die ebenen Platten 25 besitzen in mehreren nebeneinanderliegenden Längsreihen angeordnete, längliche Vertiefungen 26, die jeweils in Längsrichtung der Platten 25 ausgerichtet sind. Die ebenen Platten 25 liegen mit ihrer Längsrichtung in Längsrichtung des Förderbandes 24 ausgerichtet auf dem Förderband 24.

Die Einlegevorrichtung 22 umfasst einen Behälter 27, der sich in Querrichtung über die gesamte Breite der Einlegevorrichtung 22 erstreckt und an den beiden seitlichen Längsträgern 23 der Einlegevorrichtung 22 befestigt ist. Der Behälter 27 ist mit einer abnehmbaren, schräg stehenden Rückwand 28 versehen. Der Behälter 27 enthält eine obere Vorratskammer 29 und eine unterhalb von dieser angeordnete, nach oben offene Sammelkammer 30, die nach unten durch den Behälterboden 31 abgeschlossen wird. Die Vorratskammer 29 ist nach oben offen und verjüngt sich nach unten. An der Oberseite der Vorratskammer 29 kann ein Deckel zum Abdecken der Einfüllöffnung vorgesehen sein. Der Behälter 27 wird von oben mit losen Artikeln befüllt. Diese bilden einen losen Haufen, der die Vorratskammer 29 weitgehend ausfüllt und sich von dieser entlang der schrägstehenden Gehäuserückwand 28 nach unten bis in die Sammelkammer 30 erstreckt. Die Artikel sind in dem losen Haufen regellos übereinander bzw. nebeneinander angeordnet. In der Sammelkammer 30 bilden die Artikel ein lockeres Schüttbett, in dem sie ebenfalls regellos übereinander bzw. nebeneinander angeordnet sind.

Die Einlegevorrichtung 22 umfasst eine Entnahmevorrichtung 33, die unterhalb der schrägen Vorderseite 32 des Behälters 27 angeordnet und zu beiden Seiten des Förderbandes 24 an den beiden seitlichen Längsträgern 23 der Einlegevorrichtung 22 befestigt ist. Die Entnahmevorrichtung 33 sieht eine über der Sammelkammer 30 angeordnete, horizontale Hohlwelle 34 vor, die zu beiden Seiten des Förderbandes 24 auf den seitlichen Längsträgers 23 der Einlegevorrichtung 22 drehbar gelagert ist. Der Innenraum der Hohlwelle 34 ist über einen seitlichen Rohrstutzen 35 mit einer Unterdruckquelle verbunden. Auf dieser Hohlwelle 34 sitzen vier mit ihr starr verbundene, hohle Förderscheiben 36, die oberhalb der Sammelkammer 30 mit Abstand nebeneinander angeordnet sind. Jede Förderscheibe 36 besitzt einen nach unten in die Sammelkammer 30 hineinreichenden, hohlen Scheibenkörper, der einen zwischen den beiden Seitenwänden 37 der Förderscheibe 36 angeordneten, hohlen Innenraum 38 enthält. Dieser Innenraum 38 ist mit dem Innenraum der Hohlwelle 34 verbunden und entlang dem äußeren Umfang der Förderscheibe 36 geschlossen.

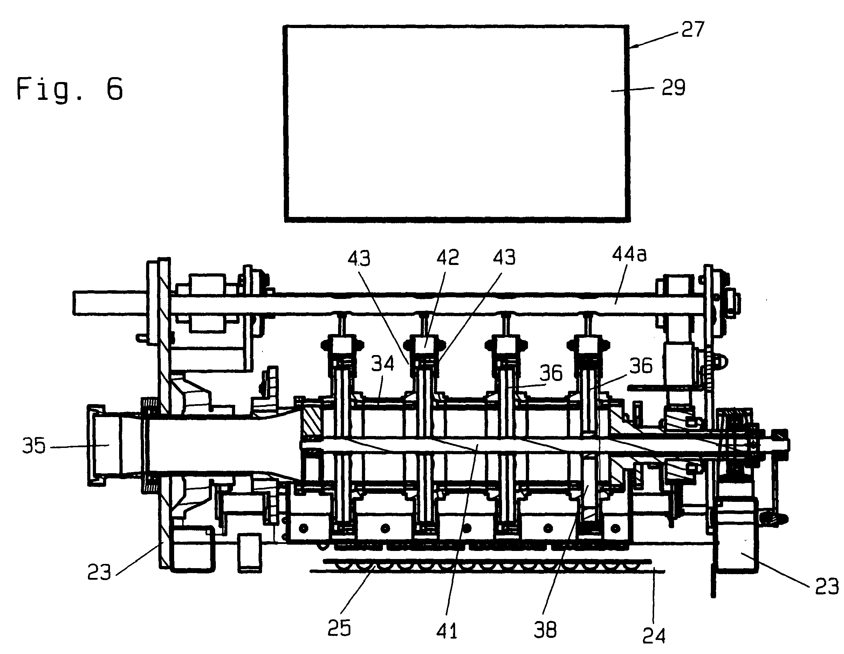

Die in Fig. 6 ganz links dargestellte Förderscheibe 36 enthält in ihrer rechten Seitenwand 37 seitliche Ansaugöffnungen 39 zum Erfassen der in der Sammelkammer 30 angeordneten losen Artikel. Die linke Seitenwand dieser Förderscheibe 36 enthält keine solchen seitlichen Ansaugöffnungen. Die anderen drei Förderscheiben 36 sind an beiden Seitenwänden 37 mit seitlichen Ansaugöffnungen 39 zum Erfassen der losen Artikel versehen. In jeder Förderscheibe 36 sind die seitlichen Ansaugöffnungen 39 nahe dem äußeren Umfang der Förderscheibe 36 in der Seitenwand 37 angeordnet und liegen auf einer zur Hohlwelle 34 konzentrischen Kreisbahn.

Alle vier Förderscheiben 36 enthalten jeweils einen in ihrem Innenraum 38 angeordneten, stationären Abdeckbauteil 40. Dieser erstreckt sich jeweils vom vorderen Scheitel der Förderscheibe 36 nach unten bis zum unteren Scheitel der Förderscheibe 36 und deckt in diesem Sektor der Förderscheibe 36 die Umlaufbahnen der in den Seitenwänden 37 der Förderscheibe 36 angeordneten 1 seitlichen Ansaugöffnungen 39 ab und trennt die in diesem Sektor befindlichen Ansaugöffnungen 39 vom dem im Innenraum 38 der Förderscheibe 36 herrschenden Unterdruck. Die mit den Förderscheiben 36 umlaufenden, seitlichen Ansaugöffnungen 39 werden jeweils am vorderen Scheitel der Förderscheibe 36 beim Erreichen des stationären Abdeckbauteils 40 von dem im Innenraum 38 der Förderscheibe 36 herrschenden Unterdruck getrennt und am unteren Scheitel der Förderscheibe 36 beim Verlassen des stationären Abdeckbauteils 40 wieder mit dem im Innenraum 38 der Förderscheibe 36 herrschenden Unterdruck verbunden. Die stationären Ab Abdeckbauteile 40 der vier Förderscheiben 36 sind auf einer entlang der Mittelachse der Hohlwelle 34 verlaufenden, starren Achse 41 befestigt, die während des Betriebes der Einlegevorrichtung 22 stillsteht. Durch Verdrehen der Achse 41 kann in den vier Förderscheiben 36 die Winkelposition des stationären Abdeckbauteils 40 verstellt werden.

Die Einlegevorrichtung 22 umfasst eine im Bereich der oberen Hälften der Förderscheiben 36 angeordnete, breite Justiereinheit 42. Diese erstreckt sich in Querrichtung über alle vier Förderscheiben 36. Die Justiereinheit 42 sieht für jede Förderscheibe 36 zwei neben den Seitenwänden 37 der Förderscheibe 36 angeordnete, bogenförmige Justierelemente 43 vor, die sich jeweils vom oberen Scheitel der Förderscheibe 36 entlang der Umlaufbahn der seitlichen Ansaugöffnungen 39 bis zum hinteren Scheitel der Förderscheibe 36 erstrecken. Die Justierelemente 43 sind an einer im Bereich des hinteren Scheitels der Förderscheiben 36 angeordneten, in Querrichtung verlaufenden, horizontalen Welle 44 befestigt. Diese Welle 44 ist zu beiden Seiten des Förderbandes 24 im Maschinengestell 23 abgestützt. Die Justierelemente 43 sind im Bereich des oberen Scheitels der Förderscheiben 36 mit einer verdrehbaren Welle 44a einer Stellvorrichtung verbunden. Die verdrehbare Welle 44a der Stellvorrichtung ist zu beiden Seiten des Förderbandes 24 auf den beiden seitlichen Längsträgern 23 der Einlegevorrichtung 22 abgestützt. Durch Verdrehen der Welle 44a können die Justierelemente 43 bei allen vier Förderscheiben 36 angehoben bzw. abgesenkt werden. Die bogenförmige Justierelemente 43 stellen bei jeder Förderscheibe 36 ein der Umlaufbahn der seitlichen Ansaugöffnungen 39 benachbartes, stationäres Hindernis dar, das z. B. bei zwei an einer Ansaugöffnung 39 mit ihren spitzen Enden festgehaltenen, mandelförmigen Artikeln einen mandelförmigen Artikel von der Ansaugöffnung 39 verdrängt bzw. abstreift.

Bei der Einlegevorrichtung 22 reicht die Entnahmevorrichtung 33 mit ihren hohlen Förderscheiben 36 von oben in die Sammelkammer 30 hinein. In dieser bilden die zwischen den Förderscheiben 36 liegenden, losen Artikel ein lockeres Schüttbett, in dem die Artikel regellos übereinander bzw. nebeneinander angeordnet sind. Die rotierenden Förderscheiben 36 durchkämmen das lockere Schüttbett und erfassen mit ihren seitlichen Ansaugöffnungen 39 einzelne der dort regellos angeordneten Artikel. Diese werden durch den im Innenraum 38 der Förderscheiben 36 herrschenden Unterdruck an den Seitenflächen der Förderscheiben 36 festgehalten und durch die Drehbewegung der Förderscheiben 36 aus dem Schüttbett entnommen, über die obere Begrenzung der Sammelkammer 30 hinaus angehoben und entlang dem Umfang der Förderscheiben 36 zum vorderen Scheitel der Förderscheiben 36 befördert. Am vorderen Scheitel der Förderscheiben 36 werden die Ansaugöffnungen 39 der Förderscheiben 36 durch die in den Förderscheiben 36 angeordneten, Abdeckbauteile 40 vom Unterdruck getrennt und die an den Ansaugöffnungen 39 festgehaltenen Artikel werden von den Förderscheiben 36 losgelassen.

Die am vorderen Scheitel der Förderscheiben 36 losgelassenen Artikel werden von einer an der Vorderseite der Entnahmevorrichtung 33 angeordneten Abgabevorrichtung 45 aufgenommen. Diese sieht für jede mit seitlichen Ansaugöffnungen 39 versehene Seitenfläche der Förderscheiben 36 eine eigene, von der Oberseite der Abgabevorrichtung 45 nach vorne schräg abfallende Rutsche 46 vor, in der die von den Ansaugöffnungen 39 der Förderscheibe 36 losgelassenen Artikel zur Unterseite der Einlegevorrichtung 22 hinunter geführt werden. Die Abgabevorrichtung 45 erstreckt sich in Querrichtung über die gesamte Breite des Förderbandes 24. Ihre Rutschen 46 sind in Querrichtung nebeneinander angeordnet. Die Rutschen 46 besitzen jeweils einen an der Oberseite der Abgabevorrichtung 45 angeordneten, dem vorderen Scheitel der zugehörigen Förderscheibe 36 benachbarten, oberen Anfangsabschnitt und einen am vorderen Ende der nach vorne schräg abfallenden Rutsche 46 angeordneten, der Unterseite der Einlegevorrichtung 22 benachbarten, unteren Endabschnitt 47. Die Rutschen 46 sind mit einem V-förmigen Querschnitt versehen. Die in den Rutschen 46 sich zur Unterseite der Einlegevorrichtung 22 nach unten bewegenden, länglichen Artikel richten sich selbsttätig in Längsrichtung der Rutschen 46 aus, bevor sie diese am unteren Endabschnitt 47 verlassen.

Bei allen Rutschen 46 ist eine dem unteren Endabschnitt 47 zugeordnete, schwenkbare Klappe 48 vorgesehen, die zwischen einer Sperrstellung und einer Freigabestellung hin und her bewegbar ist. In der Sperrstellung blockiert die Klappe 48 das untere Ende der Rutsche 46. In der Freigabestellung der Klappe 48 kann der sich in der Rutsche 46 nach unten bewegende Artikel ungehindert das untere Ende der Rutsche 46 passieren. Die den einzelnen Rutschen 46 zugeordneten, schwenkbaren Klappen 48 sind auf einer in Querrichtung verlaufenden, horizontalen Welle 49 befestigt, die zu beiden Seiten des Förderbandes 24 an den beiden seitlichen Längsträgern 23 der Einlegevorrichtung 22 schwenkbar gelagert ist und zum Betätigen der Klappen 48 verschwenkt wird.

Die auf der Hohlwelle 34 sitzenden Förderscheiben 36 weisen jeweils einen unrunden bzw. eckigen Außenumfang auf, der beim Ausführungsbeispiel der Fig. 3-6 im wesentlichen achteckig ausgebildet ist. Die Förderscheiben 36 tragen an beiden Seitenflächen jeweils seitlich abstehende Nocken 50, die von den rotierenden Förderscheiben 36 durch die Sammelkammer 30 bewegt werden. Diese Nocken 50 sind an dem der Hohlwelle 34 benachbarten, inneren Rand der Förderscheiben 36 angeordnet.

Die rotierenden Förderscheiben 36 durchkämmen das in der Sammelkammer 30 von den losen Artikeln gebildete, lockere Schüttbett und entnehmen diesem mit ihren seitlichen Ansaugöffnungen 39 einzelne, lose Artikel. Dabei bewegen die rotierenden Förderscheiben 36 ihren achteckigen Außenumfang und ihre seitlich abstehenden Nocken 50 durch dieses lockere Schüttbett und erzeugen in diesem eine Rührbewegung, die zu einem Umwälzen der losen Artikel in diesem Schüttbett bzw. zum Auflockern der losen Artikel führt.

Die Fig. 3-6 zeigen eine Einlegevorrichtung 22 mit relativ breiten Förderscheiben 36, die in einem größeren Abstand nebeneinander angeordnet sind. Die neben den beiden Seitenwänden 37 der Förderscheiben 36 angeordneten Rutschen 46 der Abgabevorrichtung 45 sind auf jede zweite Längsreihe der Vertiefungen 26 der ebenen Platten 25 ausgerichtet. Die Einlegevorrichtung 22 legt daher die losen Artikel nur in die Vertiefungen 26 jeder zweiten Längsreihe der ebenen Platten 25 ein. In die von der Einlegevorrichtung 22 ausgelassenen Längsreihen können die losen Artikel von einer zweiten Einlegevorrichtung 22 eingebracht werden, bei der die neben den Förderscheiben 36 angeordneten Rutschen 46 der Abgabevorrichtung 45 auf die von der ersten Einlegevorrichtung 22 ausgelassenen Längsreihen ausgerichtet sind. Diese zweite Einlegevorrichtung 22 kann an der Oberseite der die ebenen Platten 25 befördernden, horizontalen Transportvorrichtung stromauf oder stromab der ersten Einlegevorrichtung 22 angeordnet sein.

Mit einer erfindungsgemäß ausgebildeten Einlegevorrichtung können lose Artikel unterschiedlicher Gestalt in die Vertiefungen von ebenen Platten eingebracht werden, bei denen die Vertiefungen in Längsreihen hintereinander angeordnet sind.

## Patentansprüche

1. Einlegevorrichtung zum Einbringen von losen Artikeln, wie z. B. Mandelkerne, Haselnusskerne, gepuffte Getreidekörner etc., in die Vertiefungen von ebenen Platten, die mit in Längsreihen hintereinander angeordneten Vertiefungen versehen sind, wie z. B. gebackene Waffeltafeln, die mit einer, die Artikel in einer losen Anordnung enthaltenden, nach oben offenen Sammelkammer (9, 30), mit einer von oben in die Sammelkammer (9, 30) hineinreichenden, nach oben über die Sammelkammer (9, 30) vorstehenden und die Artikel einzeln aus der Sammelkammer (9, 30) nach oben hinausbefördernden Entnahmevorrichtung (10, 33), und mit einer die durch die Entnahmevorrichtung (10, 33) über den oberen Rand der Sammelkammer (9, 30) hinaus angehobenen Artikel zur Unterseite der Einlegevorrichtung (5, 22) hinunterführenden, zumindest eine außerhalb der Sammelkammer (9, 30) angeordnete, von der Sammelkammer (9, 30) zur Unterseite der Einlegevorrichtung (5, 22) hinunterführende Rutsche (12, 46) aufweisenden Abgabevorrichtung (11, 45) versehen ist, **dadurch gekennzeichnet, dass** die Entnahmevorrichtung (10, 33) mit einer, mit einer Unterdruckquelle verbundenen, drehbaren, hohlen Förderscheibe (13, 36) versehen ist, die in die Sammelkammer (9, 30) hinein reicht, dass die hohle Förderscheibe (13, 36) in einer Seitenwand (13a, 37) eine seitliche Ansaugöffnung (18, 39) zum Erfassen der Artikel besitzt, und dass neben der mit der seitlichen Ansaugöffnung (18, 39) versehenen Seitenwand (13a, 37) der hohlen Förderscheibe (13, 36) eine Rutsche (12, 46) der Abgabevorrichtung (11, 45) angeordnet ist.

2. Einlegevorrichtung nach Anspruch 1, **dadurch gekennzeichnet, dass** die Entnahmevorrichtung (10, 33) mit zwei oder mehreren, mit Abstand nebeneinander angeordneten, mit einer gemeinsamen Unterdruckquelle verbundenen, drehbaren, hohlen Förderscheiben (13, 36) versehen ist, die in die Sammelkammer (9, 30) hinein reichen und in einer Seitenwand (13a, 37) eine seitliche Ansaugöffnung (18, 39) zum Erfassen der Artikel besitzen, und dass neben jeder mit einer seitlichen Ansaugöffnung (18, 39) versehenen Seitenwand (13a, 37) einer Förderscheibe (13, 36) eine Rutsche (12, 46) der Abgabevorrichtung (11, 45) angeordnet ist.

3. Einlegevorrichtung nach Anspruch 1 oder 2, **dadurch gekennzeichnet, dass** die hohle Förderscheibe (13, 36) in beiden Seitenwänden (13a, 37) eine seitliche Ansaugöffnung (18, 39) zum Erfassen der Artikel besitzt, und dass neben beiden, mit einer seitlichen Ansaugöffnung (18, 39) versehenen Seitenwänden (13a, 37) der Förderscheibe (13, 36) jeweils eine Rutsche (12, 46) der Abgabevorrichtung (11, 45) angeordnet ist.

4. Einlegevorrichtung nach Anspruch 1, 2 oder 3, **dadurch gekennzeichnet, dass** in der Seitenwand (13a, 37) der hohlen Förderscheibe (13, 36) zwei oder mehrere, entlang einer Kreisbahn angeordnete, seitliche Ansaugöffnungen (18, 39) vorgesehen sind, und dass die neben der Seitenwand (13a, 37) der Förderscheibe (13, 36) angeordnete Rutsche (12, 46) der Abgabevorrichtung (11, 45) auf die Kreisbahn der Ansaugöffnungen (18, 39) ausgerichtet ist.

5. Einlegevorrichtung nach einem der Ansprüche 1 bis 4, **dadurch gekennzeichnet, dass** die Entnahmevorrichtung (10, 33) eine oberhalb der Sammelkammer (9, 30) angeordnete Justiereinheit (20, 42) für die von der Entnahmevorrichtung (10, 33) aus der Sammelkammer (9, 30) entnommenen Artikel besitzt.

6. Einlegevorrichtung nach Anspruch 5, **dadurch gekennzeichnet, dass** die Entnahmevorrichtung (10, 33) mit einer drehbaren, hohlen Förderscheibe (13, 36) versehen ist, die in die Sammelkammer (9, 30) hinein reicht und mit einer seitlichen Ansaugöffnung (18, 39) zum Erfassen der Artikel versehen ist, und dass die Entnahmevorrichtung (10, 33) eine der Förderscheibe (13, 36) zugeordnete Justiereinheit (20, 42) besitzt, die der Umlaufbahn der seitlichen Ansaugöffnung (18, 39) der Förderscheibe (13, 36) benachbart angeordnet ist.

7. Einlegevorrichtung nach Anspruch 6, **dadurch gekennzeichnet, dass** die Justiereinheit (20, 42) ein bogenförmiges Justierelement (21, 43) besitzt, das sich entlang der Umlaufbahn der seitlichen Ansaugöffnung (18, 39) der Förderscheibe (13, 36) erstreckt.

8. Einlegevorrichtung nach Anspruch 7, **dadurch gekennzeichnet, dass** das bogenförmige Justierelement (21, 43) an seinem der Umlaufbahn der seitlichen Ansaugöffnung (18, 39) der Förderscheibe (13, 36) benachbarten, unteren Rand mehrere, nach unten vorstehende Zacken (21 a, 43a) besitzt.

9. Einlegevorrichtung nach einem der Ansprüche 6 bis 8, **dadurch gekennzeichnet, dass** die Justiereinheit (20, 42) im Bereich der oberen Hälfte der drehbaren, hohlen Förderscheibe (13, 36) angeordnet ist.

10. Einlegevorrichtung nach einem der Ansprüche 6 bis 9, **dadurch gekennzeichnet, dass** die Entnahmevorrichtung (33) mit zwei oder mehreren, nebeneinander angeordneten, drehbaren, hohlen Förderscheiben (36) versehen ist, die in die Sammelkammer (30) hinein reichen und an zumindest einer Seitenwand (37) eine seitliche Ansaugöffnung (39) zum Erfassen der Artikel aufweisen, dass die Entnahmevorrichtung (10, 33) eine den Förderscheiben (36) zugeordnete, breite Justiereinheit (42) besitzt, die sich quer über alle Förderscheiben (36) erstreckt, und dass die breite Justiereinheit (42) für jede mit einer seitlichen Ansaugöffnung (39) versehene Seitenwand (37) der Förderscheiben (36) ein eigenes Justierelement (43) vorsieht.

11. Einlegevorrichtung nach einem der Ansprüche 1 bis 10, **dadurch gekennzeichnet, dass** bei der Entnahmevorrichtung (10, 33) eine drehbare, hohle Förderscheibe (13, 36) vorgesehen ist, in deren Innenraum (14, 38) ein Abdeckbauteil (19, 40) stationär angeordnet ist, der in dem der Abgabevorrichtung (11, 45) benachbarten Sektor der Förderscheibe (13, 36) angeordnet ist und dort die Umlaufbahn der in einer Seitenwand (13a, 37) der Förderscheibe (13, 36) angeordneten, seitlichen Ansaugöffnung (18, 39) abdeckt.

12. Einlegevorrichtung nach Anspruch 11, **dadurch gekennzeichnet, dass** der im Innenraum (14, 38) der hohlen Förderscheibe (13, 36) angeordnete Abdeckbauteil (19, 40) in dem der Abgabevorrichtung (11, 45) benachbarten Sektor der Förderscheibe (13, 36) die Umlaufbahnen der in beiden Seitenwänden (13a, 37) der Förderscheibe (13, 36) angeordneten, seitlichen Ansaugöffnungen (18, 39) abdeckt.

13. Einlegevorrichtung nach Anspruch 11 oder 12, **dadurch gekennzeichnet, dass** der im Innenraum (14, 38) der hohlen Förderscheibe (13, 36) angeordnete Abdeckbauteil (19, 40) als ein bogenförmiger Schieber ausgebildet ist, der im Innenraum (14, 38) der Förderscheibe (13, 36) verstellbar angeordnet ist.

14. Einlegevorrichtung nach einem der Ansprüche 1 bis 13, **dadurch gekennzeichnet, dass** jede Rutsche (12, 46) der Abgabevorrichtung (11, 45) mit einem sich nach unten verjüngenden Querschnitt versehen ist.

15. Einlegevorrichtung nach Anspruch 14, **dadurch gekennzeichnet, dass** jede Rutsche (12, 46) der Abgabevorrichtung (11, 45) einen V-förmigen Querschnitt besitzt.

16. Einlegevorrichtung nach einem der Ansprüche 1 bis 15, **dadurch gekennzeichnet, dass** bei der Abgabevorrichtung (11, 45) am unteren Ende (47) jeder Rutsche (46) eine die Rutsche (46) blockierende Klappe (48) vorgesehen ist, die zwischen einer Sperrstellung und einer Freigabestellung verschwenkbar ist.

17. Einlegevorrichtung nach einem der Ansprüche 1 bis 16, **dadurch gekennzeichnet, dass** oberhalb der Sammelkammer (9, 30) eine die losen Artikel enthaltende Vorratskammer (29) angeordnet ist, die nach unten in die Sammelkammer (9, 30) mündet, und dass die mit einer drehbaren, hohlen Förderscheibe (13, 36) versehene Entnahmevorrichtung (10, 33) unterhalb der Vorderseite der Vorratskammer (29) angeordnet ist.

18. Einlegevorrichtung nach einem der Ansprüche 1 bis 17, **dadurch gekennzeichnet, dass** die drehbare, hohle Förderscheibe (13, 36) der Entnahmevorrichtung (10, 33) einen unrunden Außenumfang besitzt.

19. Einlegevorrichtung nach einem der Ansprüche 1 bis 17, **dadurch gekennzeichnet, dass** die drehbare, hohle Förderscheibe (13, 36) der Entnahmevorrichtung (10, 33) einen eckigen Außenumfang besitzt.

20. Einlegevorrichtung nach einem der Ansprüche 1 bis 17, **dadurch gekennzeichnet, dass** die drehbare, hohle Förderscheibe (13, 36) der Entnahmevorrichtung (10, 33) an ihrem äußeren Umfang mit in Umfangsrichtung aufeinanderfolgenden Abflachungen versehen ist.

21. Einlegevorrichtung nach einem der Ansprüche 1 bis 17, **dadurch gekennzeichnet, dass** die drehbare, hohle Förderscheibe (13, 36) der Entnahmevorrichtung (10, 33) mit abstehenden, durch die Sammelkammer (30) bewegbaren Vorsprüngen (50) versehen ist.

## Claims

1. Insertion device for inserting loose items such as, for example, almond kernels, hazelnut kernels, puffed cereal grains etc. into the recesses of flat plates which are provided with recesses arranged consecutively in longitudinal rows, such as, for example, baked wafer blocks, which is provided with a collecting chamber (9, 30) which is open towards the top and which contains the items in a loose arrangement, a removal device (10, 33) which extends upwards into the collecting chamber (9, 30), which protrudes upwards beyond the collecting chamber (9, 30) and which conveys the items individually upwards from the collecting chamber (9, 30), and a dispensing device (11, 45) which guides the items lifted by the removal device (10, 33) out over the upper edge of the collecting chamber (9, 30) to the lower side of the insertion device (5, 22) and which comprises at least one slide (12, 46) located outside the collecting chamber (9, 30) which leads from the collecting chamber (9, 30) to the lower side of the insertion device (5, 22), **characterized in that** the removal device (10, 33) is provided with a rotatable, hollow conveying disk (13, 36) which is connected to a low-pressure source, which hollow conveying disk extends into the collecting chamber (9, 30), that the hollow conveying disk (13, 36) has a lateral suction opening (18, 39) in a side wall (13a, 37) for seizing items and that a slide (12, 46) of the dispensing device (11, 45) is disposed next to the side wall (13a, 37) of the hollow conveying disk (13, 36) provided with the lateral suction opening (18, 39).

2. The insertion device according to claim 1, **characterized in that** the removal device (10, 33) is provided with two or more rotatable hollow conveying disks (13, 36) which are disposed at a distance adjacent to one another and which are connected to a common low-pressure source, which disks extend into the collecting chamber (9, 30) and have a lateral suction opening (18, 39) in a side wall (13a, 37) for seizing items and that a slide (12, 46) of the dispensing device (11, 45) is disposed next to each side wall (13a, 37) of a conveying disk (13, 36) provided with a lateral suction opening (18, 39).

3. The insertion device according to claim 1 or 2, **characterized in that** the hollow conveying disk (13, 36) has a lateral suction opening (18, 39) in both side walls (13a, 37) for seizing items and that respectively a slide (12, 46) of the dispensing device (11, 45) is disposed next to both side walls (13a, 37) of the conveying disk (13, 36) provided with a lateral suction opening (18, 39).

4. The insertion device according to claim 1, 2 or 3, **characterized in that** the hollow conveying disk (13, 36) has two or more lateral suction openings (18, 39) disposed along a circular path in the side wall (13a, 37) and that the slide (12, 46) of the dispensing device (11, 45) disposed next to the side wall (13a, 37) of the conveying disk (13, 36) is aligned onto the circular path of the suction openings (18, 39).

5. The insertion device according to any one of claims 1 to 4, **characterized in that** the removal device (10, 33) has an adjusting unit (20, 42) disposed above the collecting chamber (9, 30) for the items removed by the removal device (10, 33) from the collecting chamber (9, 30).

6. The insertion device according to claim 5, **characterized in that** the removal device (10, 33) is provided with a rotatable hollow conveying disk (13, 36) which extends into the collecting chamber (9, 30) and which is provided with a lateral suction opening (18, 39) for seizing items and that the removal device (10, 33) has an adjusting unit (20, 42) assigned to the conveying disk (13, 36) which is disposed adjacent to the orbit of the lateral suction opening (18, 39) of the conveying disk (13, 36).

7. The insertion device according to claim 6, **characterized in that** the adjusting unit (20, 42) has an arcuate adjusting element (21, 43) which extends along the orbit of the lateral suction opening (18, 39) of the conveying disk (13, 36).

8. The insertion device according to claim 7, **characterized in that** the arcuate adjusting element (21, 43) has a plurality of downwardly projecting prongs (21a, 43a) on its lower edge adjacent to the orbit of the lateral suction opening (18, 39) of the conveying disk (13, 36).

9. The insertion device according to any one of claims 6 to 8, **characterized in that** the adjusting unit (20, 42) is disposed in the region of the upper half of the rotatable hollow conveying disk (13, 36).

10. The insertion device according to any one of claims 6 to 9, **characterized in that** the removal device (33) is provided with two or more adjacently disposed rotatable hollow conveying disks (36) which extend into the collecting chamber (30) and which have a lateral suction opening (39) on at least one side wall (37) for seizing items, that the removal device (10, 33) has a wide adjusting unit (42) assigned to the conveying disks (36) which extends transversely over all the conveying disks (36) and that the wide adjusting unit (42) provides its own adjusting element (43) for each side wall (37) of the conveying disks (36) provided with a lateral suction opening (39).

11. The insertion device according to any one of claims 1 to 10, **characterized in that** a rotatable hollow conveying disk (13, 36) is provided in the removal device (10, 33), in the interior (14, 38) of which a covering component (19, 40) is disposed stationarily which component is disposed in the sector of the conveying disk (13, 36) adjacent to the dispensing device (11, 45) and there covers the orbit of the lateral suction opening (18, 39) disposed in a side wall (13a, 37) of the conveying disk (13, 36).

12. The insertion device according to claim 11, **characterized in that** the covering component (19, 40) disposed in the interior (14, 38) of the hollow conveying disk (13, 36) in the sector of the conveying disk (13, 36) adjacent to the dispensing device (11, 45) covers the orbits of the lateral suction openings (18, 39) disposed in both side walls (13a, 37) of the conveying disk (13, 36).

13. The insertion device according to claim 11 or 12, **characterized in that** the covering component (19, 40) disposed in the interior (14, 38) of the hollow conveying disk (13, 36) is configured as an arcuate slider which is disposed adjustably in the interior (14, 38) of the conveying disk (13, 36).

14. The insertion device according to any one of claims 1 to 13, **characterized in that** each slide (12, 46) of the dispensing device (11, 45) is provided with a downwardly tapering cross-section.

15. The insertion device according to claim 14, **characterized in that** each slide (12, 46) of the dispensing device (11, 45) has a V-shaped cross-section.

16. The insertion device according to any one of claims 1 to 15, **characterized in that** in the dispensing device (11, 45) a flap (48) blocking the slide (46), which is pivotable between a locking position and a release position, is provided at the lower end (47) of each slide (46).

17. The insertion device according to any one of claims 1 to 16, **characterized in that** a storage chamber (29) containing the loose items which opens downwards into the collecting chamber (9, 30) is disposed above the collecting chamber (9, 30) and that the removal device (10, 33) provided with a rotatable hollow conveying disk (13, 36) is disposed below the front side of the storage chamber (29).

18. The insertion device according to any one of claims 1 to 17, **characterized in that** the rotatable hollow conveying disk (13, 36) of the removal device (10, 33) has a non-round outer circumference.

19. The insertion device according to any one of claims 1 to 17, **characterized in that** the rotatable hollow conveying disk (13, 36) of the removal device (10, 33) has an angular outer circumference.

20. The insertion device according to any one of claims 1 to 17, **characterized in that** the rotatable hollow conveying disk (13, 36) of the removal device (10, 33) is provided with successive flattenings in the circumferential direction on its outer circumference.

21. The insertion device according to any one of claims 1 to 17, **characterized in that** the rotatable hollow conveying disk (13, 36) of the removal device (10, 33) is provided with protruding projections (50) which are movable through the collecting chamber (30).

## Revendications

1. Dispositif d'insertion destiné à introduire des articles en vrac, tels que par ex. des amandes, des noisettes, des grains de céréales soufflés etc. dans les creux de plaques planes qui sont munies de creux placés les uns derrière les autres en rangées longitudinales, par exemple des tablettes de gaufres cuites, lequel est muni d'un compartiment collecteur (9, 30) ouvert sur le dessus, contenant les articles placés en vrac, d'un dispositif de prélèvement (10, 33), pénétrant dans le compartiment collecteur (9, 30) par le dessus, saillant vers le haut par-dessus le compartiment collecteur (9, 30) et transportant les articles un à un hors du compartiment collecteur (9, 30) vers le haut et d'un dispositif distributeur (11, 45) comportant au moins une goulotte (12, 46), placée à l'extérieur du compartiment collecteur (9, 30), conduite vers le bas, du compartiment collecteur (9, 30) vers le dessous du dispositif d'insertion (5, 22), conduisant vers le bas, vers le dessous du dispositif d'insertion (5, 22) les articles relevés par le dispositif de prélèvement (10, 33) par-dessus le bord supérieur du compartiment collecteur (9, 30), **caractérisé en ce que** le dispositif de prélèvement (10, 33) est muni d'un disque de transport (13, 36) creux rotatif, relié à une source de dépression, qui arrive jusqu'à l'intérieur du compartiment collecteur (9, 30), **en ce que** le disque de transport (13, 36) creux dispose dans une paroi latérale (13a, 37) d'un orifice d'aspiration (18, 39) latéral pour saisir les articles et **en ce qu'**à côté de la paroi latérale (13a, 37) du disque de transport (13, 36) creux, munie de l'orifice d'aspiration (18, 39) latéral est placée une goulotte (12, 46) du dispositif distributeur (11, 45).

2. Dispositif d'insertion selon la revendication 1, **caractérisé en ce que** le dispositif de prélèvement (10, 33) est muni de deux ou de plusieurs disques de transport (13, 36) rotatifs creux, placés côte à côte avec un écart, reliés à une source de dépression commune, qui arrivent jusque dans le compartiment collecteur (9, 30) et qui disposent dans une paroi latérale (13a, 37) d'un orifice d'aspiration (18, 39) latéral destiné à saisir les articles et **en ce qu'**à côté de chaque paroi latérale (13a, 37) d'un disque de transport (13, 36) munie d'un orifice d'aspiration (18, 39) latéral est placée une goulotte (12, 46) du dispositif distributeur (11, 45).

3. Dispositif d'insertion selon la revendication 1 ou la revendication 2, **caractérisé en ce que** le disque de transport (13, 36) creux dispose dans les deux parois latérales (13a, 37) d'un orifice d'aspiration (18, 39) latéral, destiné à saisir les articles et **en ce qu'**à côté des deux parois latérales (13a, 37) du disque de transport (13, 36) munies d'un orifice d'aspiration (18, 39) latérale est placée chaque fois une goulotte (12, 46) du dispositif distributeur (11, 45).

4. Dispositif d'insertion selon la revendication 1, la revendication 2 ou la revendication 3, **caractérisé en ce que** dans la paroi latérale (13a, 37) du disque de transport (13, 36) creux sont prévus deux ou plusieurs orifices d'aspiration (18, 39) latéraux, placés le long d'une trajectoire circulaire et **en ce que** la goulotte (12, 46) du dispositif distributeur (11, 45) placée à côté de la paroi latérale (13a, 37) du disque de transport (13, 36) est orientée vers la trajectoire circulaire des orifices d'aspiration (18, 39).

5. Dispositif d'insertion selon l'une quelconque des revendications 1 à 4, **caractérisé en ce que** le dispositif de prélèvement (10, 33) possède une unité d'ajustage (20, 42) placée au-dessus du compartiment collecteur (9, 30) pour les articles prélevés par le dispositif de prélèvement (10, 33) hors du compartiment collecteur (9, 30).

6. Dispositif d'insertion selon la revendication 5, **caractérisé en ce que** le dispositif de prélèvement (10, 33) est muni d'un disque de transport (13, 36) rotatif creux qui arrive jusque dans le compartiment collecteur (9, 30) et qui est muni d'un orifice d'aspiration (18, 39) latéral, destiné à saisir les articles et **en ce que** le dispositif de prélèvement (10, 33) possède une unité d'ajustage (20, 42) associée au disque de transport (13, 36) qui est placée au voisinage de l'orbite de l'orifice d'aspiration (18, 39) latéral du disque de transport (13, 36).

7. Dispositif d'insertion selon la revendication 6, **caractérisé en ce que** l'unité d'ajustage (20, 42) possède un élément d'ajustage (21, 43) cintré qui s'étend le long de l'orbite de l'orifice d'aspiration (18, 39) latéral du disque de transport (13, 36).

8. Dispositif d'insertion selon la revendication 7, **caractérisé en ce que** sur son bord inférieur voisin de l'orbite de l'orifice d'aspiration (18, 39) latéral du disque de transport (13, 36), l'élément d'ajustage (21, 43) cintré possède plusieurs dents (21a, 43a) saillant vers le bas.

9. Dispositif d'insertion selon l'une quelconque des revendications 6 à 8, **caractérisé en ce que** l'unité d'ajustage (20, 42) est placée dans la région de la moitié supérieure du disque de transport (13, 36) rotatif creux.

10. Dispositif d'insertion selon l'une quelconque des revendications 6 à 9, **caractérisé en ce que** le dispositif de prélèvement (33) est muni de deux ou de plusieurs disques de transports (36) rotatifs creux, placés côte à côte qui arrivent jusque dans le compartiment collecteur (30) et qui sur au moins une paroi latérale (37) comportent un orifice d'aspiration (39) latéral destiné à saisir les articles, **en ce que** le dispositif de prélèvement (10, 33) possède une unité d'ajustage (42) large, associée aux disques de transport (36) qui s'étend à la transversale par-dessus tous les disques de transport (36) et **en ce que** la large unité d'ajustage (42) prévoit un propre élément d'ajustage (43) pour chaque paroi latérale (37) des disques de transport (36) munie d'orifices d'aspiration (39) latéraux.

11. Dispositif d'insertion selon l'une quelconque des revendications 1 à 10, **caractérisé en ce que** près du dispositif de prélèvement (10, 33), il est prévu un disque de transport (13, 36) rotatif creux, dans l'espace intérieur (14, 38) duquel est placé de manière stationnaire un élément de recouvrement (19, 40) qui est placé dans le secteur du disque de transport (13, 36) qui est voisin du dispositif distributeur (11, 45) et qui y recouvre l'orbite de l'orifice d'aspiration (18, 39) latéral, placé dans une paroi latérale (13a, 37) du disque de transport (13, 36).

12. Dispositif d'insertion selon la revendication 11, **caractérisé en ce que** dans le secteur du disque de transport (13, 36) qui est voisin du dispositif distributeur (11, 45), l'élément de recouvrement (19, 40) placé dans l'espace intérieur (14, 38) du disque de transport (13, 36) creux recouvre les orbites des orifices d'aspiration (18, 39) placés dans les deux parois latérales (13a, 37) du disque de transport (13, 36).

13. Dispositif d'insertion selon la revendication 11 ou la revendication 12, **caractérisé en ce que** l'élément de recouvrement (19, 40) placé dans l'espace intérieur (14, 38) du disque de transport (13, 36) creux est conçu en tant qu'un coulisseau cintré qui est placé en étant réglable dans l'espace intérieur (14, 38) du disque de transport (13, 36).

14. Dispositif d'insertion selon l'une quelconque des revendications 1 à 13, **caractérisé en ce que** chaque goulotte (12, 46) du dispositif distributeur (11, 45) est munie d'une section transversale se rétrécissant vers le bas.

15. Dispositif d'insertion selon la revendication 14, **caractérisé en ce que** chaque goulotte (12, 46) du dispositif distributeur (11, 45) possède une section transversale en forme de V.

16. Dispositif d'insertion selon l'une quelconque des revendications 1 à 15, **caractérisé en ce que** près du dispositif distributeur (11, 45), sur l'extrémité (47) inférieure de chaque goulotte (46), il est prévu une trappe (48) bloquant la goulotte (46) qui est susceptible de pivoter entre une position de blocage et une position de libération.

17. Dispositif d'insertion selon l'une quelconque des revendications 1 à 16, **caractérisé en ce qu'**au-dessus du compartiment collecteur (9, 30) est placé un compartiment de réserve (29) contenant les articles en vrac, qui débouche vers le bas dans le compartiment collecteur (9, 30) et **en ce que** le dispositif de prélèvement (10, 33) muni du disque de transport (13, 36) rotatif creux est placé en-dessous de la face avant du compartiment de réserve (29).

18. Dispositif d'insertion selon l'une quelconque des revendications 1 à 17, **caractérisé en ce que** le disque de transport (13, 36) rotatif creux du dispositif de prélèvement (10, 33) a un pourtour extérieur ovalisé.

19. Dispositif d'insertion selon l'une quelconque des revendications 1 à 17, **caractérisé en ce que** le disque de transport (13, 36) rotatif creux du dispositif de prélèvement (10, 33) a un pourtour extérieur angulaire.

20. Dispositif d'insertion selon l'une quelconque des revendications 1 à 17, **caractérisé en ce que**, sur son pourtour extérieur, le disque de transport (13, 36) rotatif creux du dispositif de prélèvement (10, 33) est muni de méplats successifs dans la direction périphérique.

21. Dispositif d'insertion selon l'une quelconque des revendications 1 à 17, **caractérisé en ce que** le disque de transport (13, 36) rotatif creux du dispositif de prélèvement (10, 33) est muni de saillies (50) débordantes, mobiles à travers le compartiment collecteur (30).
